# EUROPÄISCHE PATENTANMELDUNG

(11) **EP 4 075 405 A1**
(43) Veröffentlichungstag der Anmeldung: **19.10.2022**
(21) Anmeldenummer: 22162004.0
(22) Anmeldetag: 15.03.2022
(51) Int. Cl.: G08C 21/00, G05B 19/02

(54) **ZENTRALGERÄT FÜR EIN DATENTECHNISCHES NETZWERK**

(30) Priorität: 15.04.2021 DE 102021109418
(71) Anmelder: Turck Holding GmbH, 58553 Halver (DE)
(72) Erfinder: Strunkmann, Peter, 32760 Detmold (DE)
(74) Vertreter: DTS Patent- und Rechtsanwälte Schnekenbühl und Partner mbB

(57) **Zusammenfassung**

Die Erfindung betrifft ein Zentralgerät (30) für ein datentechnisches Netzwerk, umfassend eine Eingangs-Schnittstelle (32) zum Empfangen eines Anforderungssignals, eine Steuereinheit (34) zum Erzeugen eines Steuersignals in Abhängigkeit von dem empfangenen Anforderungssignal und zumindest eine Ausgangs-Schnittstelle (36) zum Übertragen des Steuersignals an zumindest ein Teilnehmer-Gerät (41, 42, 43). Dabei ist das Steuersignal dazu eingerichtet, das Teilnehmer-Gerät (41, 42, 43) zum Ausgeben eines Teilnehmer-Ausgabesignals zum Identifizieren einer physischen Position des TeilnehmerGeräts (41, 42, 43) anzusteuern. Die Erfindung betrifft ferner ein System (10) für ein datentechnisches Netzwerk mit dem Zentralgerät (30) der Erfindung. Die Erfindung betrifft zudem ein Verfahren zum Betreiben eines Zentralgeräts (30) in einem datentechnischen Netzwerk, wobei dem Zentralgerät (30) zumindest ein Teilnehmer-Gerät (41, 42, 43) datentechnisch zugeordnet ist.

## Beschreibung

Die Erfindung betrifft ein Zentralgerät für ein datentechnisches Netzwerk, ein System für ein datentechnisches Netzwerk sowie ein Verfahren zum Betreiben eines Zentralgeräts (30) in einem datentechnischen Netzwerk.

Bei komplexen Netzwerken sind häufig viele Aktoren und Sensoren sowie Steuerungs- und Kontrollgeräte miteinander verbunden und an verschiedenen Orten positioniert. Bei der Fehlersuche, zur Wartung oder zu anderen Zwecken müssen bestimmte Geräte gelegentlich physisch aufgefunden werden. Dies kann jedoch gerade bei einem standardisierten Aussehen der Geräte erhebliche Schwierigkeiten verursachen, da diese nicht ohne Weiteres an ihrem Äußeren zu erkennen sind.

Aus der DE 10 2018 118 872 ist ein Verfahren zur Überprüfung der Datenübertragung eines elektrischen Schaltgerätes bekannt, bei dem eine LED ein Lichtsignal erzeugt, das vom Betrachter als Gleichlicht wahrgenommen wird, mittels dessen jedoch ein optisches Lesegerät Nutzerdaten erfassen kann.

Es sind Verfahren bekannt, bei denen ein Gerät aufgefordert werden kann, durch Blinken für eine definierte Zeit seine Position anzuzeigen. Allerdings ist es dabei mit großem Bedienaufwand verbunden, eine größere Zahl von Geräten in einem System zu identifizieren.

Es ist die Aufgabe der Erfindung, ein Zentralgerät und System für ein datentechnisches Netzwerk sowie ein Verfahren zum Betreiben eines solchen Zentralgeräts bereitzustellen, die eine besonders einfache und effiziente Bedienung erlauben.

Diese Aufgabe wird durch ein Zentralgerät, ein System und ein Verfahren mit den Merkmalen der unabhängigen Ansprüche gelöst. Vorteilhafte Ausgestaltungen und Weiterbildungen der Erfindung sind in den abhängigen Ansprüchen angegeben.

Das Zentralgerät für ein datentechnisches Netzwerk umfasst eine Eingangs-Schnittstelle zum Empfangen eines Anforderungssignals, eine Steuereinheit zum Erzeugen eines Steuersignals in Abhängigkeit von dem empfangenen Anforderungssignal und zumindest eine Ausgangs-Schnittstelle zum Übertragen des Steuersignals an zumindest ein Teilnehmer-Gerät. Dabei ist das Teilnehmer-Gerät insbesondere datentechnisch mit der Ausgangs-Schnittstelle des Zentralgeräts verbunden. Dabei ist das Steuersignal dazu eingerichtet, das Teilnehmer-Gerät zum Ausgeben eines Teilnehmer-Ausgabesignals zum Identifizieren einer physischen Position des Teilnehmer-Geräts anzusteuern.

Dadurch kann das Teilnehmer-Gerät vorteilhafterweise besonders einfach aufgefunden werden. Die Aufforderung zum Ausgeben des Ausgabesignals kann zudem besonders effizient ausgewertet werden.

Bei einer Ausbildung ist die Eingangs-Schnittstelle dazu eingerichtet, das Anforderungssignal mittels eines ersten datentechnischen Protokolls zu empfangen, insbesondere mittels Ethernet, *single pair ethernet*, SPE, Feldbus, Profibus oder eines anderen Bus-Protokolls. Ferner ist die Ausgangs-Schnittstelle dazu eingerichtet, das Steuersignal mittels eines zweiten datentechnischen Protokolls zu übertragen, etwa mittels IO-Link, AS-Interface, Hart-Protokolls oder eines anderen Protokolls zur Sensor/Aktor-Kommunikation. Dabei sind das erste und zweite datentechnische Protokoll voneinander unterschiedlich ausgebildet. Beispielsweise kann das Zentralgerät an ein Bus-System angeschlossen und als IO-Link-Master konfiguriert sein, wobei die Teilnehmer-Geräte als IO-Link-Devices konfiguriert und dem IO-Link-Master zugeordnet sind.

Dadurch erfolgt die Ansteuerung vorteilhafterweise protokollübergreifend:
Das erste datentechnische Protokoll wird genutzt, um das Zentralgerät anzusprechen und das Anforderungssignal zu übertragen. Dieser Teil der Ansteuerung erfolgt beispielsweise durch ein externes Gerät, das mit dem Zentralgerät datentechnisch gekoppelt ist, etwa über ein Bus-System. Das externe Gerät kann beispielsweise eine Bedienschnittstelle aufweisen, etwa eine Schnittstelle zum Programmieren und/oder zur Behebung von Fehlern oder technischen Problemen innerhalb des datentechnischen Netzwerks.

Das zweite datentechnische Protokoll wird anschließend genutzt, um die Anforderung zur Ausgabe des Teilnehmer-Ausgabesignals von dem Zentralgerät an die damit verbundenen Teilnehmer-Geräte zu übertragen. Da sich das zweite vom ersten Protokoll unterscheidet, kann diese Ansteuerung nicht direkt erfolgen, etwa von dem externen Gerät aus, sondern das Zentralgerät übernimmt in einem Zwischenschritt die Weiterleitung, etwa innerhalb eines IO-Link-Systems. Dabei kann das Zentralgerät gegebenenfalls eine Modifikation der Anforderung vornehmen, sodass das ausgegebene Teilnehmer-Ausgabesignal besonders einfach und nutzerfreundlich konfiguriert werden kann.

Das Zentralgerät vermittelt also in der Ansteuerung zwischen den Ebenen des ersten und zweiten datentechnischen Protokolls. Dabei ist es nicht erforderlich für den Nutzer, dieses Verhalten des Zentralgeräts und der angeschlossenen Teilnehmer-Geräte einzeln zu konfigurieren. Vielmehr kann durch ein einfaches Kommando an das Zentralgerät die Ausgabe innerhalb eines ganzen Teilsystems verteilt werden.

Das Ausgabesignal kann auf verschiedene Weisen ausgebildet sein. Es ist insbesondere dazu geeignet, einem menschlichen Nutzer das Auffinden des jeweiligen Geräts zu ermöglichen. Insbesondere kann der Nutzer in einem Raum lokalisieren, von welchem Gerät das Ausgabesignal ausgegeben wird.

Bei einer weiteren Ausbildung ist das Teilnehmer-Ausgabesignal für einen Nutzer sinnlich erfassbar gebildet ist. Insbesondere ist das Ausgabesignal für das menschliche Hören oder Sehen erfassbar.

Dadurch wird vorteilhafterweise die Bedienung sehr einfach gestaltet und der Nutzer kann das Gerät ohne zusätzliche Ausrüstung physisch lokalisieren. Im Gegensatz zu bekannten Systemen ist kein weiteres Gerät notwendig, um das Ausgabesignal zu erfassen.

Für die Ausgabe des Teilnehmer-Ausgabesignals können verschiedene Modalitäten genutzt werden. Diese Modalitäten sind insbesondere durch die Einheiten zur Ausgabe des Ausgabesignals definiert, etwa für eine akustisch oder visuell wahrnehmbare Ausgabe, zum Beispiel mittels eines Displays, eines Leuchtelements oder eines Lautsprechers.

Verschiedene Teilnehmer-Geräte können die Teilnehmer-Ausgabesignale mittels unterschiedlicher Ausgabemodalitäten ausgeben, etwa in Abhängigkeit davon, welche Arten von Ausgabeeinheiten zur Verfügung stehen: Zum Beispiel kann ein Teilnehmergerät mit einem Display das Teilnehmer-Ausgabesignal mittels des Displays ausgeben, während andere Teilnehmer-Geräte ohne ein Display beispielsweise Teilnehmer-Ausgabesignale durch Blinken von Leuchtelementen ausgeben. Auch Kombinationen verschiedener Modalitäten der Ausgabe können vorstellbar sein.

Insbesondere kann vorgesehen sein, dass das Steuersignal keine konkrete Ausgabemodalität für die Ausgabe des Teilnehmer- Ausgabesignals oder Zentralgerät-Ausgabesignals vorgibt, sondern dass das Gerät selbst bestimmt, mittels welcher Modalitäten das jeweilige Ausgabesignal ausgegeben wird. Ferner kann vorgesehene sein, dass das Anforderungssignal und/oder das Steuersignal eine Information über eine bevorzugte Modalität oder eine Anweisung für eine bestimmte Modalität für das Ausgabesignal umfasst.

Bei einer Weiterbildung umfasst das Teilnehmer-Ausgabesignal ein Lichtsignal mit einem Lichtparameter und/oder eine grafische und/oder eine alphanumerische Anzeige auf einem Display des Teilnehmer-Geräts.

Dadurch ist es vorteilhafterweise besonders einfach und klar, das Gerät in seiner Umgebung zu lokalisieren, selbst unter widrigen Verhältnissen wir bei schlechter Beleuchtung, die beispielsweise eine Beschriftung schwer erfassbar macht.

Dabei kann der Lichtparameter beispielsweise eine Farbe und/oder Helligkeit betreffen; insbesondere kann ein solches Lichtsignal mittels eines Leuchtelements wie etwa einer Leuchtdiode (*light emitting diode*, LED) ausgebbar sein, allerdings können auch hinterleuchtete oder auf andere Weise beleuchtete Anzeigeelemente genutzt werden.

Der Lichtparameter eines Lichtsignals kann einstellbar sein, etwa durch eine Konfiguration, die am Teilnehmer-Gerät oder am Zentralgerät vorgenommen wird, oder durch eine entsprechende Information, die von dem Steuersignal umfasst ist.

Das Lichtsignal kann eine bestimmte Zeitdauer aufweisen, nach deren Ablauf seine Ausgabe automatisch beendet wird, oder das Lichtsignal kann in Abhängigkeit von einer Eingabe eines Nutzers oder eines weiteren Steuersignals beendet werden. Der Lichtparameter kann statisch oder dynamisch erzeugt werden, insbesondere kann eine periodische Änderung der Helligkeit und/oder Farbe vorgesehen sein, etwa nach Art eines Blinkens.

Ein Display, welches von dem Teilnehmer-Gerät umfasst oder in dessen physischer Umgebung angeordnet ist, kann auf unterschiedliche Weisen ausgebildet sein. Beispielsweise kann das Display ein Array von Bildpunkten umfassen, sodass praktisch beliebige Zeichen ausgebbar sind, oder es kann eine Segmentanzeige umfassen, wobei die Segmente die anzeigbaren Zeichen vorgeben

Bei einer Ausbildung weist das Zentralgerät ferner eine Ausgabeeinheit auf. Dabei ist die Ausgabeeinheit des Zentralgeräts dazu eingerichtet, in Abhängigkeit von dem Steuersignal ein Zentralgerät-Ausgabesignal zum Identifizieren einer physischen Position des Zentralgeräts auszugeben.

Dadurch kann vorteilhafterweise auch das Zentralgerät einfach lokalisiert werden.

Insbesondere ist das Zentralgerät-Ausgabesignal von dem Teilnehmer-Ausgabesignal unterscheidbar ausgebildet.

Dabei kann ferner das Zentralgerät-Ausgabesignal für einen Nutzer wahrnehmbar gebildet sein, insbesondere visuell oder akustisch.

Insbesondere kann das Zentralgerät-Ausgabesignal analog zu dem Teilnehmer-Ausgabesignal gebildet werden und die vorliegend beschriebenen Merkmale aufweisen.

Bei einer weiteren Ausbildung ist das Zentralgerät ferner mit einer Mehrzahl von Teilnehmer-Geräten datentechnisch verbindbar. Dabei ist die Steuereinheit dazu ausgebildet, das Steuersignal in Abhängigkeit von dem empfangenen Anforderungssignal ferner so zu erzeugen, dass alle mit dem Zentralgerät verbundenen Teilnehmer-Geräte oder eine definierte Teilmenge davon zum Ausgeben von Teilnehmer-Ausgabesignalen angesteuert werden Die Teilnehmer-Ausgabesignale der verschiedenen Teilnehmer-Geräte können dabei gleich oder individuell unterschiedlich ausgebildet sein.

Wenn lediglich eine Teilmenge der angeschlossenen Teilnehmer-Geräte zur Ausgabe angesteuert werden soll, so kann die Definition der Teilmenge beispielsweise durch das Anforderungssignal erfolgen. Ferner kann eine Konfiguration des Zentralgeräts erfolgen, etwa durch eine Nutzereingabe, um die Teilmenge zu definieren. Beispielsweise kann ein bestimmter Adressbereich in einem datentechnischen Netzwerk als Teilmenge definiert sein.

Bei einer Weiterbildung umfasst die Ausgangs-Schnittstelle eine Mehrzahl von Ausgangs-Anschlüssen. Jedem verbundenen Teilnehmer-Gerät ist dabei ein Ausgangs-Anschluss zugeordnet. Insbesondere ist eine eindeutige Zuordnung zwischen dem Teilnehmer-Gerät und einem Ausgangs-Anschluss vorgesehen. Ferner ist bei der Weiterbildung das Steuersignal so eingerichtet, dass die von den Teilnehmer-Geräten ausgegebenen Teilnehmer-Ausgabesignale ferner in Abhängigkeit von dem zugeordneten Ausgangs-Anschluss gebildet sind.

Insbesondere kann das Teilnehmer-Ausgangssignal eines Teilnehmer-Geräts so gebildet werden, dass es in eindeutiger Weise einem bestimmten Ausgangs-Anschluss des Zentralgeräts zuzuordnen ist.

Dies erleichtert vorteilhafterweise das Auffinden der physischen Position eines Teilnehmer-Geräts, das in einer bestimmten Weise mit dem Zentralgerät datentechnisch verbunden ist. Dies erleichtert beispielsweise die Suche nach Fehlern in einem System.

Die Ausgangs-Anschlüsse des Zentralgeräts können beispielsweise "Ports" sein, wie sie aus der Informationstechnik an sich bekannt sind. Sie können physische oder virtuelle Anschlüsse des Zentralgeräts repräsentieren, etwa einzelne Verbindungselemente zum Anschließen von Datenkabeln für die Teilnehmer-Geräte und/oder datentechnisch bereitgestellte Anschlüsse für Teilnehmer-Geräte über einen gemeinsamen Kabelanschluss und/oder datentechnisch bereitgestellte Anschlüsse für Teilnehmer-Geräte über ein kabelloses Verbindungselement, beispielsweise über Funk, WLAN, Bluetooth oder andere Verfahren.

Beispielsweise sind die Teilnehmer-Ausgabesignale demnach so gebildet, dass sie eine sinnlich erfassbare Information über den jeweils zugeordneten Ausgangs-Anschluss umfassen. Der Nutzer kann dadurch etwa visuell erfassen, über welchen Ausgangs-Anschluss ein Teilnehmer-Gerät mit dem Zentralgerät verbunden ist.

Zum Beispiel kann jedes verbundene Teilnehmer-Gerät ein Piep- oder Blinksignal ausgeben, wobei periodisch eine bestimmte Anzahl von Piep- oder Blinkereignissen getrennt von zeitlichen Pausen ausgegeben werden. Die Anzahl der Piep- oder Blinkereignisse pro Periode kann dann einer dem Ausgangs-Anschluss zugeordneten Zahl zugeordnet sein, beispielsweise einer Nummerierung der Ausgangsanschlüsse, etwa einer fortlaufenden Nummerierung.

Wenn ein verbundenes Teilnehmer-Gerät das Teilnehmer-Ausgabesignal mittels eines Displays ausgibt, dann können auch alphanumerische Zeichen oder grafische Elemente genutzt werden, um den zugeordneten Ausgangs-Anschluss des Zentralgeräts zu identifizieren.

Ferner kann vorgesehen sein, dass zusammen mit dem Ausgabesignal eines Teilnehmer-Geräts eine weitere Ausgabe an dem Zentralgerät so ausgegeben wird, wodurch der jeweilige Ausgabe-Anschluss erfassbar oder physisch lokalisierbar ist. Zum Beispiel kann eine Lichtquelle an einem Anschluss blinken oder ein anderes Lichtsignal ausgeben, um anzuzeigen, dass mit diesem Anschluss ein bestimmtes Teilnehmer-Gerät angeschlossen ist. Beispielsweise werden dabei auf gleiche Weise gebildete Lichtsignale sowohl am Ausgangs-Anschluss und an dem Teilnehmer-Gerät ausgegeben.

Das System für ein datentechnisches Netzwerk umfasst ein Zentralgerät gemäß der vorliegenden Beschreibung und zumindest ein Teilnehmer-Gerät, das mit dem Zentralgerät datentechnisch gekoppelt ist. Dabei umfasst das Teilnehmer-Gerät eine Ausgabeeinheit zum Ausgeben eines Ausgabesignals zum Identifizieren einer physischen Position des Teilnehmer-Geräts. Optional kann dabei das Ausgabesignal visuell oder akustisch wahrnehmbar gebildet sein.

Bei dem Verfahren zum Betreiben eines Zentralgeräts in einem datentechnischen Netzwerk ist dem Zentralgerät zumindest ein Teilnehmer-Gerät datentechnisch zugeordnet. Ein Anforderungssignal wird empfangen und in Abhängigkeit von dem empfangenen Anforderungssignal wird ein Steuersignal erzeugt. Das Steuersignal ist dazu eingerichtet, das Teilnehmer-Gerät zum Ausgeben eines Teilnehmer-Ausgabesignals zum Identifizieren einer physischen Position des Teilnehmer-Geräts anzusteuern.

Das Verfahren ist insbesondere dazu ausgebildet, die Vorrichtung zu betreiben. Es weist daher dieselben Vorteile auf wie die erfindungsgemäße Vorrichtung.

Nachfolgend wird die Erfindung anhand der anliegenden Zeichnung näher erläutert. Dabei zeigt:

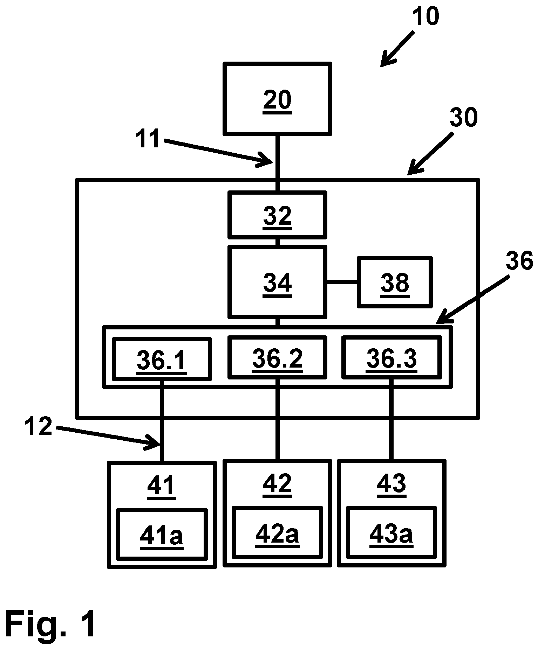

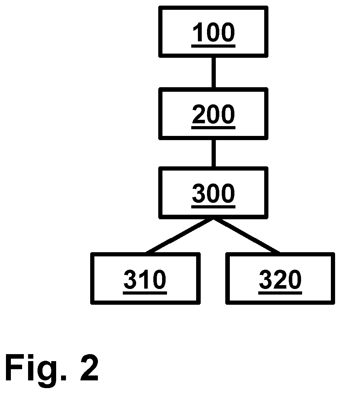

- **Figur 1**: ein Ausführungsbeispiel des Systems mit einem Zentralgerät.

Mit Bezug zu **Figur 1** wird ein Ausführungsbeispiel des Systems mit dem Zentralgerät erläutert.

Das System 10 umfasst ein Zentralgerät 30, ein externes Gerät 20 und mehrere Teilnehmer-Geräte 41, 42, 43.

Bei dem Beispiel sind das externe Gerät 20 und das Zentralgerät 30 über eine Ethernet-Verbindung 11 auf an sich bekannte Weise miteinander datentechnisch verbunden.

In weiteren Ausführungsbeispielen können andere Verfahren zur datentechnischen Verbindung genutzt werden, etwa *Single Pair Ethernet* (SPE) oder Bus-Verbindungen wie Feldbus, beispielsweise Profibus.

Ferner sind die Teilnehmer-Geräte 41, 42, 43 mittels IO-Link-Verbindungen 12 auf an sich bekannte Weise mit dem Zentralgerät 30 verbunden.

In weiteren Ausführungsbeispielen können andere Verfahren zur datentechnischen Verbindung genutzt werden, etwa Hart- oder AS-Interface-Protokolle.

In dem System 10 des Beispiels kann das externe Gerät 20 über ein erstes Protokoll, nämlich Ethernet, das Zentralgerät 30 ansprechen, während dieses über ein zweites Protokoll, nämlich IO-Link, die Teilnehmer-Geräte 41, 42, 43 ansprechen kann. Ein direktes Ansprechen der Teilnehmer-Geräte 41, 42, 43 kann von dem externen Gerät 20 aus nicht erfolgen, da eine "Protokoll-Grenze" überwunden werden muss.

Das Zentralgerät 30 umfasst eine Eingangs-Schnittstelle 32, mittels derer die datentechnische Verbindung zum externen Gerät 20 hergestellt wird.

Das Zentralgerät 30 umfasst ferner eine Ausgangs-Schnittstelle 36, die ihrerseits Ausgangs-Anschlüsse 36.1, 36.2, 36.3 umfasst. Die Teilnehmer-Geräte 41, 42, 43 sind an dieses Ausgangs-Schnittstelle 36 angeschlossen, wobei jedem angeschlossenen Teilnehmer-Gerät 41, 42, 43 ein Ausgangs-Anschluss 36.1, 36.2, 36.3in eindeutiger Weise zugeordnet ist.

Das Zentralgerät 30 umfasst ferner eine Steuereinheit 34, die mit der Eingangs- 32 und Ausgangsschnittstelle 36 gekoppelt ist.

Ferner ist eine mit der Steuereinheit 34 gekoppelte Ausgabeeinheit 38 des Zentralgeräts 30 vorgesehen, die bei dem Beispiel eine Leuchtdiode (LED) umfasst.

Ausgehend von dem oben erläuterten Ausführungsbeispiel des Systems wird nachfolgend ein Ausführungsbeispiel des Verfahrens erläutert.

In einem Schritt 100 erzeugt das externe Gerät 20 ein Anforderungssignal, das über die datentechnische Verbindung 11 an das Zentralgerät 30 übertragen wird. Hierzu wird bei dem Beispiel die Eingangs-Schnittstelle 32 des Zentralgeräts 30 genutzt.

Dabei wird bei dem Beispiel ein Ethernet-Protokoll verwendet, es kann jedoch ein anders Protokoll wie *single pair ethernet* (SPE), Profibus, Feldbus oder ein vergleichbares anderes Protokoll verwendet werden.

In einem Schritt 200 wird das von der Schnittstelle 32 empfangene Anforderungssignal an die Steuereinheit 34 des Zentralgeräts 30 weitergeleitet und dort ausgewertet. Die Steuereinheit 34 ist dazu eingerichtet, in Abhängigkeit von dem empfangenen Anforderungssignal ein Steuersignal oder mehrere Steuersignale zu erzeugen, um weitere Einheiten anzusteuern.

Im vorliegenden beispielhaften Fall wird das Steuersignal so gebildet, dass damit die Ausgabeeinheit 38 des Zentralgeräts sowie die angeschlossenen Teilnehmer-Geräte 41, 42, 43 mit den Ausgabeeinheiten 41a, 42a, 43a angesteuert werden.

In einem Schritt 300 wird das Steuersignal von der Steuereinheit 34 ausgegeben.

Bei dieser Ausgabe des Steuersignals wird in einem Schritt 310 bei dem Ausführungsbeispiel des Verfahrens die Ausgabeeinheit 38 des Zentralgeräts 30 direkt angesteuert. Diese Ausgabeeinheit 38 ist als LED 38 ausgebildet, die auf das Steuersignal hin in einer definierten Weise blinkt.

Parallel dazu werden in einem Schritt 320 die angeschlossenen Teilnehmer-Geräte 41, 42 ,43 über die Ausgangs-Schnittstelle 36 und die datentechnische Verbindung 12 angesteuert. Dabei handelt es sich bei dem Ausführungsbeispiel um eine Verbindung 12 gemäß IO-Link-Standard.

Die ebenfalls als LEDs 41a, 42a, 43a ausgebildeten Ausgabeeinheiten 41a, 42a, 43a geben Ausgabesignale aus, indem sie auf das Steuersignal hin in einer definierten Weise blinken.

Das definierte Blinken der Leuchtdioden 38, 41a, 42a, 43a der Zentral- 30 und Teilnehmer Geräte 41, 42, 43 im System 10 weist dabei Lichtparameter auf. Diese Lichtparameter können für alle Geräte 30, 41, 42, 43 gleich oder unterschiedlich ausgebildet sein.

Insbesondere umfassen die Lichtparameter etwa Helligkeit, Lichtfarbe, Blinkfrequenz beziehungsweise Anzahl von Blinkereignissen innerhalb eines Zeitintervalle oder einer Periode, die Dauer einzelner Blinkereignisse sowie ihr Abstand zueinander und die Dauer von Dunkelphasen zwischen den Blinkereignissen. Ferner kann eine Dauer der Ausgabe des Blinkens als Lichtparameter vorgegeben sein, etwa als Time-Out des ausgegebenen Ausgabesignals.

Bei dem Ausführungsbeispiel ist vorgesehen, dass die Lichtparameter für jede Ausgabeeinheit des Zentral- 30 und der Teilnehmer-Geräte 41, 42, 43 individuell ausgebildet sind und von der Steuereinheit 34 des Zentralgeräts 30 vorgegeben werden. Die Teilnehmer-Ausgabesignale der Teilnehmer-Geräte 41, 42, 43 sind dabei so ausgebildet, dass sie eine Information über den jeweiligen Port beziehungsweise Ausgangs-Anschluss 36.1, 36.2, 36.3 umfassen, bei dem das Teilnehmer-Gerät 41, 42, 43 an die Ausgangs-Schnittstelle 36 des Zentralgeräts 30 angeschlossen ist.

Zum Beispiel können die Ausgangs-Anschlüsse 36.1, 36.2, 36.3 nummeriert sein und das Ausgabesignal jedes der Teilnehmer-Geräte 41, 42, 43 kann mittels eines Blinksignals die einem Ausgangs-Anschluss 36.1, 36.2, 36.3 zugeordnete Nummer ausgeben. Beispielsweise kann das Ausgabesignal für eine erste Teilnehmer-Einheit 41 ein einzelnes Blinken umfassen, um anzuzeigen, dass dieses am ersten Ausgangs-Anschluss 36.1 der Ausgangs-Schnittstelle 36 des Zentralgeräts 30 angeschlossen ist.

Bei einem weiteren Ausführungsbeispiel kann ferner der Ausgangs-Schnittstelle 36 des Zentralgeräts eine weitere Ausgabeeinheit zugeordnet sein, mittels welcher in Abhängigkeit von dem Steuersignal ein Ausgabe-Anschluss 36.1, 36.2, 36.3 hervorgehoben wird, sodass etwa ein Nutzer einen Ausgabe-Anschluss 36.1, 36.2, 36.3 identifizieren kann, mit dem ein bestimmtes Teilnehmer-Gerät 41, 42, 43 datentechnisch verbunden ist.

Bei einem weiteren Ausführungsbeispiel ist vorgesehen, dass zumindest ein Lichtparameter für das Ausgabesignal von den Geräten 30, 41, 42, 43 jeweils selbst gebildet wird. Das heißt, das Ausgabesignal wird nicht für alle Geräte 30, 41, 42, 43 mit allen Lichtparametern von der Steuereinheit 34 des Zentralgeräts 30 vorgegeben, sondern das Zentralgerät und die Teilnehmer-Geräte können beispielsweise je nach den zur Verfügung stehenden Ausgabeeinheiten 38, 41a, 42a, 43a das Ausgabesignal bestimmen. Beispielsweise kann in diesem Fall als Ausgabesignal ein Blinken ausgegeben werden, wenn die Ausgabeeinheit 38, 41a, 42a, 43a eine Lichtquelle, etwa eine LED, umfasst. Das Ausgabesignal kann ferner alphanumerische Zeichen umfassen, wenn die Ausgabeeinheit 38, 41a, 42a, 43a ein zur entsprechenden Ausgabe geeignetes Display umfasst. Ferner können die Teilnehmer-Geräte 41, 42, 43 selbständig erkennen, mit welchem Port oder Ausgangs-Anschluss 36.1, 36.2, 36.3 des Zentralgeräts 30 sie datentechnisch verbunden sind und sie können das Ausgabesignal entsprechend ausbilden, sodass dieses eine Information zum Identifizieren des jeweils angeschlossenen Ports oder Ausgangs-Anschlusses 36.1, 36.2, 36.3 umfasst. Beispielsweise umfasst das Ausgangssignal ein Blinken mit einer Anzahl periodisch wiederholter Blinkereignisse, wobei die Anzahl der Blinkereignisse einer Nummer des angeschlossenen Ports oder Ausgangs-Anschlusses 36.1, 36.2, 36.3 entspricht.

Analog zum Blinken können andere Arten von Ausgabesignalen ausgegeben werden, etwa andere visuell oder akustisch wahrnehmbare Signale, die von den Ausgabeeinheiten 38, 41a, 42a, 43a ausgebbar sind. Auch diese Ausgabesignale können für alle Geräte 30, 41, 42, 43 gleich oder unterschiedlich ausgebildet sein und sie können von der Steuereinheit 34 vorgegeben werden oder von den Geräten 30, 41, 42, 43 selbst gebildet werden, etwa in Abhängigkeit von den zur Verfügung stehenden Ausgabeeinheiten 38, 41a, 42a, 43a.

Bei einem weiteren Ausführungsbeispiel können die Ausgabeeinheiten 38, 41a, 42a, 43a der Zentral- 30 beziehungsweise Teilnehmer-Geräte 41, 42, 43 ein Display umfassen, mittels dessen Lichtsignale und/oder alphanumerische Zeichen ausgebbar sind. Das Steuersignal kann in diesem Fall dazu gebildet sein, die Ausgabeeinheiten 38, 41a, 42a, 43a so anzusteuern, dass mittels des Displays das Ausgabesignal so ausgegebene wird, dass die physische Position des jeweiligen Zentral- 30 und/oder Teilnehmer-Geräts 41, 42, 43 bestimmt werden kann und/oder dass eine weitere Information über die datentechnische Verbindung zwischen dem Zentralgerät 30 und einem angeschlossenen Teilnehmer-Gerät 41, 42, 43 ausgegeben wird, etwa der zum Anschließen verwendete physische oder virtuelle Ausgangs-Anschluss 36.1, 36.2, 36.3 beziehungsweise Port der Ausgangs-Schnittstelle 36, oder die physische Position eines verwendeten physischen Ausgangs-Anschlusses 36.1, 36.2, 36.3.

Bei einem weiteren Ausführungsbeispiel können zusätzlich zu einem Ausgabesignal zum Identifizieren einer physischen Position des Zentral- 30 oder Teilnehmer-Geräts 41, 42, 43 mittels eines solchen Displays oder auf andere, an sich bekannte Weise Diagnosedaten ausgegeben werden, insbesondere betreffend die Funktionsfähigkeit und/oder Qualität der datentechnischen Verbindung 12.

Bei einer weiteren Ausbildung umfasst das Anforderungssignal eine Information über zumindest einen Ausgabeparameter, etwa einen Lichtparameter. Das Steuersignal wird so erzeugt, dass das ausgegebene Ausgabesignal, etwa ein Lichtsignal, mit Eigenschaften entsprechend dem Anforderungssignal erzeugt wird. Beispielsweise kann mittels des Anforderungssignals festgelegt werden, in welcher Farbe das Zentralgerät 30 und/oder die Teilnehmer-Geräte 41, 42, 43 ein Lichtsignal erzeugen und beispielsweise blinken.

### Bezugszeichenliste

10 System
11 Ethernet-Verbindung
12 IO-Link-Verbindung
20 Externes Gerät
30 Zentralgerät; IO-Link-Master
32 Eingangs-Schnittstelle; Ethernet-Schnittstelle
34 Steuereinheit
36 Ausgangs-Schnittstelle; IO-Link-Schnittstelle
36.1, 36.2, 36.3 Ausgangs-Anschluss; Port (der IO-Link-Schnittstelle)
38 Ausgabeeinheit; Leuchtdiode (LED)
41, 42, 43 Teilnehmer-Gerät, IO-Link-Device
41a, 42a, 43a Ausgabeeinheit; Leuchtdiode (LED)
100,200,300,310,320 Schritt

## Patentansprüche

1. Zentralgerät (30) für ein datentechnisches Netzwerk; umfassend
eine Eingangs-Schnittstelle (32) zum Empfangen eines Anforderungssignals;
eine Steuereinheit (34) zum Erzeugen eines Steuersignals in Abhängigkeit von dem empfangenen Anforderungssignal; und
zumindest eine Ausgangs-Schnittstelle (36) zum Übertragen des Steuersignals an zumindest ein Teilnehmer-Gerät (41, 42, 43); wobei
das Steuersignal dazu eingerichtet ist, das Teilnehmer-Gerät (41, 42, 43) zum Ausgeben eines Teilnehmer-Ausgabesignals zum Identifizieren einer physischen Position des Teilnehmer-Geräts (41, 42, 43) anzusteuern.

2. Zentralgerät (30) gemäß Anspruch 1,
**dadurch gekennzeichnet, dass**
die Eingangs-Schnittstelle (32) dazu eingerichtet ist, das Anforderungssignal mittels eines ersten datentechnischen Protokolls zu empfangen, insbesondere mittels Ethernet, *single pair ethernet*, SPE, Feldbus, Profibus oder eines anderen Bus-Protokolls; und
die Ausgangs-Schnittstelle (36) dazu eingerichtet ist, das Steuersignal mittels eines zweiten datentechnischen Protokolls zu übertragen, etwa mittels IO-Link, AS-Interface, Hart-Protokolls oder eines anderen Protokolls zur Sensor/Aktor-Kommunikation; wobei
das erste und zweite datentechnische Protokoll voneinander unterschiedlich ausgebildet sind.

3. Zentralgerät (30) gemäß einem der vorhergehenden Ansprüche,
**dadurch gekennzeichnet, dass**
das Teilnehmer-Ausgabesignal für einen Nutzer sinnlich erfassbar gebildet ist.

4. Zentralgerät (30) gemäß einem der vorhergehenden Ansprüche,
**dadurch gekennzeichnet, dass**
das Teilnehmer-Ausgabesignal ein Lichtsignal mit einem Lichtparameter und/oder eine grafische Anzeige auf einem Display des Teilnehmer-Geräts umfasst.

5. Zentralgerät (30) gemäß einem der vorhergehenden Ansprüche,
**dadurch gekennzeichnet, dass**
das Zentralgerät (30) ferner eine Ausgabeeinheit (38) aufweist; wobei
die Ausgabeeinheit (38) des Zentralgeräts (30) dazu eingerichtet ist, in Abhängigkeit von dem Steuersignal ein Zentralgerät-Ausgabesignal zum Identifizieren einer physischen Position des Zentralgeräts (30) auszugeben; wobei,
optional, das Zentralgerät-Ausgabesignal für einen (menschlichen) Nutzer wahrnehmbar gebildet ist, insbesondere visuell oder akustisch.

6. Zentralgerät (30) gemäß einem der vorhergehenden Ansprüche,
**dadurch gekennzeichnet, dass**
das Zentralgerät (30) ferner mit einer Mehrzahl von Teilnehmer-Geräten (41, 42, 43) datentechnisch verbindbar ist; wobei
die Steuereinheit dazu ausgebildet ist, das Steuersignal in Abhängigkeit von dem empfangenen Anforderungssignal ferner so zu erzeugen, dass alle mit dem Zentralgerät (30) verbundenen Teilnehmer-Geräte (41, 42, 43) oder eine definierte Teilmenge davon zum Ausgeben von Teilnehmer-Ausgabesignalen angesteuert werden.

7. Zentralgerät (30) gemäß Anspruch 6,
**dadurch gekennzeichnet, dass**
die Ausgangs-Schnittstelle (36) eine Mehrzahl von Ausgangs-Anschlüssen (36.1, 36.2, 36.3) umfasst; und
jedem verbundenen Teilnehmer-Gerät (41, 42, 43) ein Ausgangs-Anschluss (36.1, 36.2, 36.3) (eindeutig) zugeordnet ist; wobei
das Steuersignal ferner so eingerichtet ist, dass die von den Teilnehmer-Geräten (41, 42, 43) ausgegebenen Teilnehmer-Ausgabesignale ferner in Abhängigkeit von dem zugeordneten Ausgangs-Anschluss (36.1, 36.2, 36.3) gebildet sind.

8. System (10) für ein datentechnisches Netzwerk; umfassend
ein Zentralgerät (30) gemäß einem der vorhergehenden Ansprüche und
zumindest ein Teilnehmer-Gerät (41, 42, 43), das mit dem Zentralgerät (30) datentechnisch gekoppelt ist; wobei
das Teilnehmer-Gerät (41, 42, 43) eine Ausgabeeinheit (41a, 42a, 43) zum Ausgeben eines Ausgabesignals zum Identifizieren einer physischen Position des Teilnehmer-Geräts (41, 42, 43) umfasst; wobei,
optional, das Ausgabesignal visuell oder akustisch wahrnehmbar gebildet ist.

9. Verfahren zum Betreiben eines Zentralgeräts (30) in einem datentechnischen Netzwerk, wobei dem Zentralgerät (30) zumindest ein Teilnehmer-Gerät (41, 42, 43) datentechnisch zugeordnet ist; wobei
ein Anforderungssignal empfangen wird; und
in Abhängigkeit von dem empfangenen Anforderungssignal ein Steuersignal erzeugt wird; wobei
das Steuersignal dazu eingerichtet ist, das Teilnehmer-Gerät (41, 42, 43) zum Ausgeben eines Teilnehmer-Ausgabesignals zum Identifizieren einer physischen Position des Teilnehmer-Geräts (41, 42, 43) anzusteuern.
